# EUROPEAN PATENT SPECIFICATION

(11) **EP 0 388 939 B1**
(45) Date of publication and mention of the grant of the patent: **04.08.1993**
(21) Application number: 90105375.1
(22) Date of filing: 21.03.1990
(51) Int. Cl.: D06F 58/28

(54) **Device and method for controlling operation of clothes dryer**
Verfahren und Vorrichtung zur Steuerung eines Wäschetrockners
Dispositif et procédé de réglage d'un sèche-linge

(30) Priority: 24.03.1989 JP 72873/89; 30.03.1989 JP 81116/89; 05.04.1989 JP 86548/89
(43) Date of publication of application: 26.09.1990
(73) Proprietor: SANYO ELECTRIC CO., LTD., Moriguchi-shi, Osaka (JP)
(72) Inventor: Tobe, Ryuzo, Oura-gun, Gunma-ken (JP)
(74) Representative: Glawe, Delfs, Moll & Partner

(56) References cited:
- EP-A- 0 080 048
- EP-B- 0 038 561
- CA-A- 888 840
- DE-C- 1 423 921
- GB-A- 1 032 418
- US-A- 4 195 415

## Description

### Field of the Invention

The present invention relates generally to a clothes dryer, and more particularly to a device for controlling the operation of the clothes dryer and to a control method thereof. The invention relates more particularly to a humidity control device capable of controlling in multi-level wetness of clothes after dried and to a control method thereof.

### Description of the Background Art

Clothes driers which forcedly dry clothes are currently in wide use not only for business but also for home. Examples of such conventional clothes driers are disclosed, for example, in Japanese Patent Laying-Open No. 58-146398 and CA-A- 888 840.

The conventional clothes dryers includes, in a casing, a rotary drum for accommodating clothes to be dried, a motor for driving this drum, an electric heater for heating and drying the clothes in the drum, a temperature sensor for detecting a heating temperature in the rotary drum, a relative humidity sensor for detecting a relative humidity of air in the drum, and a control device for controlling running operation of the clothes dryer in response to detection outputs from the temperature sensor and the relative humidity sensor.

Clothes are heated and dried employing this clothes dryer by the steps of putting wet clothes in the rotary drum, keeping the inside of the rotary drum at a high temperature by the electric heater, and then rotating the rotary drum and forcedly circulating the air in the rotary drum to remove moisture in the air.

The relative humidity sensor for detecting dryness of the clothes is formed of polymer resin compounds and is provided near the rotary drum. The control device monitors a relative humidity in the rotary drum during drying operation by employing an output of the relative humidity sensor, and stops the drying operation with the electric heater being in an OFF state when a sensed relative humidity Rh falls down to a predetermined value.

For example, an aimed relative humidity Rh is 30% in normal dry mode (the mode for sufficiently drying clothes), while it is 50% in ironing mode (the mode for making clothes slightly wet in consideration for ironing of the clothes after dried).

The relative humidity Rh is here represented in percentage by the following expression.
Rh = (absolute humidity)/(maximum value of absolute humidity)
where the absolute humidity is the amount of water contained in air per 1 m³ at a certain temperature, which is represented in g/m³.

The conventional clothes dryer, however, involves disadvantages as described below and hence requires some improvements.

Since the drying operation is controlled in accordance with a relative humidity in the rotary drum room, a value of the relative humidity varies dependently on quantity, material, degree of wetness or the like of clothes in the rotary drum. That is, since the wet clothes are in the rotary drum of a definite volume, a difference in quantity of clothes having the same degree of wetness changes the relative humidity. Even if the relative humidity reaches a target value, it is impossible to obtain clothes desirably dried in such a case.

Therefore, the relative humidity varies with the drying operation, it is impossible to accurately control the wetness of dried clothes because the varying relative humidities are all monitored for controlling based on the same reference value (for example, Rh = 50% in ironing mode). Thus, when a small quantity of clothes are to be dried, for example, a value of the relative humidity is low, resulting in insufficient dryness of the clothes.

The relative humidity sensor employs polymer resin compounds for its moisture sensitive portion. Therefore, the sensor has a poor resistance to a high temperature and is thus liable to be deteriorated specially when the temperature in the rotary drum is 70°C or above. Thus, the drying operation can not be carried out at a high temperature such as of 75°C and hence is necessary to be carried out within the temperature range for good operation of the relative humidity sensor. It requires a long time to complete the operation of drying clothes, and thus it is impossible to dry the clothes at high speed.

Further, the relative humidity sensor has its electrical resistance varying depending on the amount of water absorbed onto the surface of the electrically conductive polymer resin compounds, thereby detecting the relative humidity. As for the characteristic of the sensor, however, since there is a hysteresis in which an input-output characteristic differs between the times of humidification and dehumidification, a measurement error of the relative humidity is large and its response speed is low. In addition, since the relative humidity is detected depending on the amount of water absorbed onto the surface of the moisture sensitive portion of the sensor, it is impossible to accurately detect the relative humidity when foreign materials are adhered to the surface, causing unstable measuring operations.

Moreover, in case of application of an alternating voltage, it is easy to handle the relative humidity sensor because of a large variation width in alternating resistance values thereof; however, it is difficult to make a sensor output linear to a relative humidity because of its exponential variation in the alternating resistance values. This makes it difficult to accurately control the humidity.

A door is provided at the casing. The dryer is rendered inoperable while the door is open. In case that the operation is interrupted for a long time due to the opening/closing of the door or an interruption of electricity service, the relative humidity in the rotary drum is already decreased, when the operation is restarted, due to exhaustion of moist air by the opening/closing of the door due to liquefication of water and/or due to re-adhesion of water to the clothes along with a decrease in temperature after the operation is stopped. Therefor, the clothes are considered as dried, with the result of completion of the operation. When the operation is forcedly restarted, since the drying operation is again carried out from the beginning, semi-dried clothes are treated as wet clothes, wasting operating time and power consumption.

A method of detecting electric resistance of clothes to detect dryness of the clothes is disclosed in U.S. Pat. No. 4,531,305 invented by K. Nagayasu and assigned to Matsushita Electric Industrial Co. Limited. In Nagayasu Patent, the electric resistance of the wet clothes and the varying rate of the temperature of exhaust air are monitored. When the electric resistance reaches a predetermined value, the drying operation is stopped after the period of time, which is determined in accordance with the varying rate of the exhaust air temperature, has passed.

### SUMMARY OF THE INVENTION

An object of the present invention is to provide a control device for controlling the operation of an improved clothes dryer, eliminating the disadvantages of the above described conventional clothes dryer.

Another object of the present invention is to provide a control device for controlling the operation of a clothes dryer, offering a great energy-saving effect and a great antiseptic effect.

A further object of the present invention is to provide a control device for controlling the operation of a clothes dryer, capable of carrying out drying operation even at a high temperature.

Still another object of the present invention is to provide a control device for controlling the operation of a clothes dryer, capable of a reducing time period required for drying clothes.

A still further object of the present invention is to provide a control device for controlling the operation of a clothes dryer, capable of controlling, in multi-level and accurately, a wetness of clothes after dried.

A still further object of the present invention is to provide a method of controlling the operation of a clothes dryer, capable of controlling in high accuracy a wetness of dry clothes.

A still further object of the present invention is to provide a method of controlling the operation of a clothes dryer, offering a great energy-saving effect and a great antiseptic effect.

A control device for controlling the operation of a clothes dryer in accordance with the present invention includes absolute humidity sensor element means for detecting absolute humidity in a rotary drum, and means for controlling heating operation of the rotary drum in response to an output from the absolute humidity sensor element means.

The heating control means includes means for measuring the output from the absolute humidity sensor element means to detect and store a maximum value Vm of the measured output, means for subjecting the maximum value Vm from the storage means to a predetermined operation processing to derive a comparison reference value (Vm - Δ), means for comparing the comparison reference value with absolute humidity from the absolute humidity sensor element means, and means for stopping the heating operation of the rotary drum in response to an output of the comparison means.

The heating operation stopping means includes means for stopping heating of the rotary drum when the measured absolute humidity is decreased to the comparison reference value (Vm - Δ) in the comparison means.

The heating control means includes means for removing in-phase noise and antiphase noise of the output of the absolute humidity sensor element means and amplifying the sensor element means output.

The heating control means includes memory means for saving, when the operation is interrupted, the sensor element means output immediately before the interruption.

A humidity control method in accordance with the present invention includes the steps of detecting absolute humidity in the rotary drum, and controlling the heating operation of the rotary drum in response to the detected absolute humidity.

The heating control step includes the steps of evaluating a maximum value of the detected absolute humidity, subjecting the evaluated maximal absolute humidity to a predetermined operation processing for deriving a comparison reference value, comparing the comparison reference value with the detected absolute humidity, and controlling the heating operation of the rotary drum in accordance with a result of the comparison.

The comparison reference deriving step includes the step of subtracting from the evaluated maximal absolute humidity Vm a preset value Δ according to operation mode.

The heating control step includes the step of removing in-phase noise and antiphase noise of a signal indicating the detected absolute humidity and amplifying the signal indicating the absolute humidity before the step of detecting and storing the maximum value.

The heating control step further includes the step of saving, in response to the interruption of the operation of the clothes dryer, detected absolute humidity information immediately before the interruption, and the step of performing heat control in accordance with the saved information in response to restarting of the operation.

The absolute humidity information in the rotary drum is employed for controlling the heating operation in the rotary drum. Since the absolute humidity sensor element is stably operable even at a high temperature, the clothes can be dried at a high temperature. This makes it possible to reduce a time period required before the completion of the operation of the clothes dryer as well as to enhance the antiseptic effect on the clothes.

The absolute humidity sensor element means has an input-output characteristic without hysteresis and with high response speed and has a stable operation characteristic even when foreign materials are adhered thereto, whereby a humidity is controlled at high speed and in high accuracy.

Although the absolute humidity varies depending on temperature, since the temperature in the rotary drum is maintained at a predetermined set value, detection of the variation in the absolute humidity at this set temperature makes it possible to accurately dry the clothes in a desired dry state.

Due to such a structure that the rotary drum completes the heating operation when the absolute humidity sensor element output decreases by a predetermined value from the maximal absolute humidity Vm, even if there is a variation in quantity, material, wetness etc. of the clothes in the rotary drum, it becomes possible to detect accurately dryness of the clothes, thereby accurately achieving a desirable dryness of the clothes.

Moreover, the use of the absolute humidity sensor makes it possible to derive the sensor output in linear form and also facilitate the removal of in-phase noise and antiphase noise by employing an amplifying circuit and a lowpass filter, thereby enabling a highly accurate humidity control with a simple circuit configuration.

In addition, the control device includes a memory back-up device for storing, in case when the operation is interrupted due to the interruption of electricity service or the like, a signal from the absolute humidity sensor monitored immediately before the interruption. Therefore, after the restoration of the operation, the operation can be restarted based on the content stored in the memory back-up device. Further, when the operation is interrupted for a long time due to the opening/closing of the door, service interruption etc., even if the humidity in the rotary drum is already decreased, it does not happen that the clothes are regarded as dry so as to complete the operation. It is possible to restart the operation from the dryness of the clothes at the time of interruption and thus save the operation time and power consumption.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view showing an overall structure of a clothes dryer according to one embodiment of the present invention;
Fig. 2 is an electric circuit diagram showing the configuration of a humidity control device of the clothes dryer according to the embodiment of the present invention;
Fig. 3 is a diagram showing one example of the detailed configuration of an absolute humidity sensor and of a bridge circuit shown in Fig. 2;
Fig. 4 is a diagram showing one example of the detailed configuration of an amplifying circuit shown in Fig. 2;
Fig. 5 is a time chart showing a variation of an output of the absolute humidity sensor employed in the humidity control device according to the embodiment of the present invention;
Fig. 6 is a table showing a relationship in correspondence between operation modes of the clothes dryer according to the embodiment of the present invention and predetermined varying amounts of the respective operation modes;
Fig. 7 is a diagram showing the relationship between the operation modes of the clothes dryer and load drive;
Fig. 8 is a flow chart showing a method of controlling the operation of the clothes dryer according to the embodiment of the present invention;
Figs. 9A and 9B are graphs for describing the operation of a measuring circuit shown in Fig. 2;
Fig. 10 is a flow chart showing a method of determining a maximum value of absolute humidity detected by the absolute humidity sensor; and
Fig. 11 is a graph showing a control operation flow from the time when the operation of the clothes dryer is interrupted to the time when the operation is subsequently restarted.

### DESCRIPTION OF THE PREFERRED EMBODIMENTS

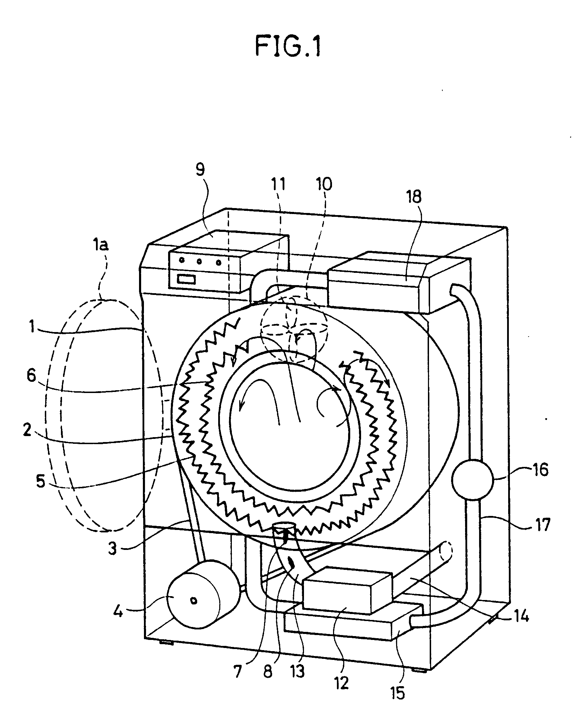

Referring to Fig. 1, this dryer comprises in a casing 1, a rotary drum 2 for accommodating clothes, a motor 4 for driving the rotary drum 2 through a belt 3, electric heaters 5, 6 for heating and drying the clothes in the drum 2, a temperature sensor 7 for detecting a temperature in the rotary drum 2, an absolute humidity sensor 8 for detecting an absolute humidity inside the rotary drum 2, and a control device 9 for controlling running operation of the clothes dryer in response to detection outputs from the temperature sensor 7 and the humidity sensor 8. The electric heaters 5 and 6 are different in their working power; for example, the electric heater 5 has 1KW working power, while the electric heater 6 has 2KW working power.

The casing 1 has a door 1a to be used for putting clothes in/out of the rotary drum 2. The door 1a has a door switch (not shown) from which a signal is transmitted to the control device 9, when the door 1a is opened, so that the dryer stops operating.

The dryer further comprises an air inlet opening 10 provided on a rear panel of the casing 1, for forcedly circulating air in the rotary drum, a motor fan 11 provided near the air inlet opening 10, for feeding air taken through the air inlet opening 10 into the rotary drum 2, a compressor 12 for taking highly moist air in the rotary drum 2 through an air collector pipe 13 to compress the air for extraction moisture therefrom, and an exhaust duct 14 for exhausting the air from which water is removed by the compressor 12 to the outside of the dryer.

The clothes dryer further comprises as a water circulating circuit for exhausting water produced by drying the clothes, a lower tank 15 for collecting and storing the water liquified by the compression of the compressor 12, and a pump 16 for pumping the water stored in the lower tank 15 up to an upper tank 18 through a pipe 17.

The temperature sensor 7 and the absolute humidity sensor 8 are installed in the air collector pipe 13 constituting an air circulating circuit. As will be described in detail later, the absolute humidity sensor 8 comprises a series-connected circuit of a sealed thermistor and a partly ventilated thermistor. Water adheres onto this partly ventilated thermistor and then the thermistor detects a temperature variation upon evaporation of the adhered water, whereby an absolute humidity in the rotary drum 2 is detected. The thermistor is in general formed of temperature sensitive resistance elements such as ceramics, an operating temperature range of which can be made wider than that of polymer resin compounds, thereby enabling a sufficiently accurate operation even under high temperature environment.

The water collected in the water circulating circuit is discharged from the upper tank 18 for convenience of the user. That is, the upper tank 18 is detachable, for example, and thus the user exhausts the collected water in the water circulating circuit by detaching the upper tank 18.

In operation, the clothes dryer rotates the rotary drum 2 into which clothes to be dried is put, keeps the inside of the rotary drum 2 at a high temperature by employing the electric heater 5 and/or the other electric heater 6, forcedly circulates the air in the rotary drum 2 by employing the air circulating circuit, and then removes water from the highly moist air in the rotary drum 2 so as to make the clothes dry.

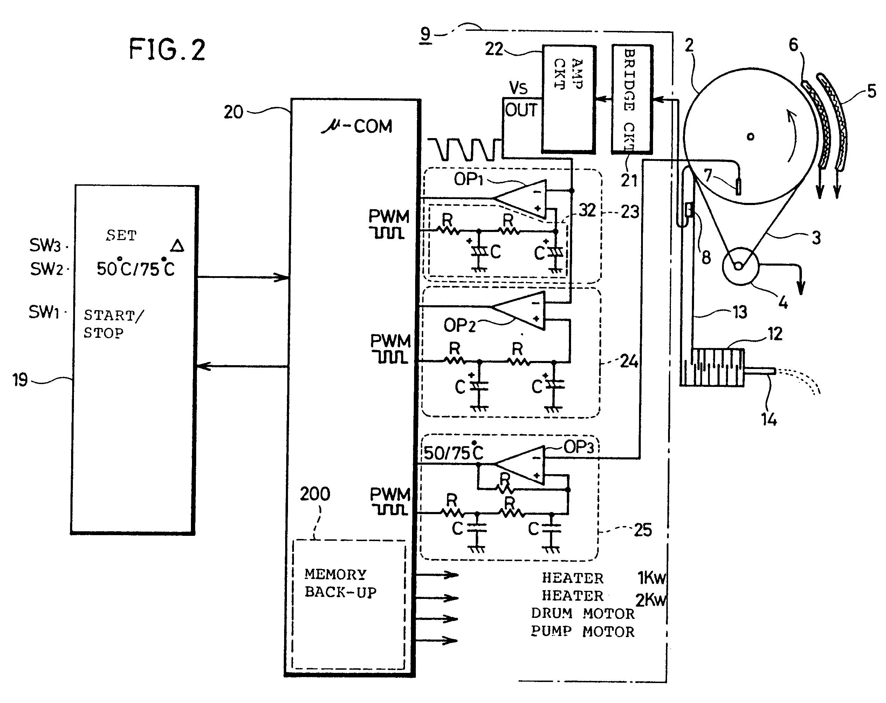

Fig. 2 shows one example of the detailed configuration of an electric circuit of the control device. Referring to the figure, the control device 9 comprises an instructing portion 19 for generating a desired operation instructing signal, a control circuit 20 formed such as of a microcomputer for controlling the temperature and humidity of the clothes dryer in response to a signal from the instructing portion 19 and to detection outputs from the temperature sensor 7 and absolute humidity sensor 8, circuit portions 21, 22 for amplifying the detection output from the absolute humidity sensor 8, a measuring circuit 23 for measuring a maximum value Vm during a predetermined time period in response to outputs Vs received from the amplifying circuit portions 21, 22, a detecting circuit 24 for detecting desired dryness of clothes in response to the outputs Vs received from the amplifying circuit portions 21, 22, and a temperature controlling circuit 25 for maintaining the temperature in the rotary drum 2 at a set temperature.

The instructing portion 19 comprises a power switch (not shown), a running operation starting instruction switch SW1, a running mode selection switch SW2, a switch SW3 for setting Δ value (the amount of varying absolute humidity) in each of running modes which will be described later, and so on.

The amplifying circuit portions 21, 22 comprise a bridge circuit 21 for receiving an output of the absolute humidity sensor 8, and an amplifying circuit 22 for amplifying an output of the bridge circuit 21. The bridge circuit 21 accurately detects a variation of impedance in the absolute humidity sensor 8 to derive a voltage signal correspondent with this varied impedance. The amplifying circuit 22 amplifies an output signal from the bridge circuit 21 to derive the amplified signal as absolute humidity information Vs. Detailed configurations of the bridge circuit 21 and amplifying circuit 22 will be described later.

The measuring circuit 23 comprises an operational amplifier OP1, and a resistor R and a condenser C connected to constitute an integrating circuit. The operational amplifier OP1 has its (-) input received the output Vs of the amplifying circuit 22 and its (+) input receive rectangular-wave scan signal, which is pulse-width modulated, from the control circuit 20 formed such as of a microcomputer (hereinafter simply referred to as microcomputer) through a digital/analog (D/A) converter 32 comprising a resistor R and a condenser C. The converter 32 is a CR type D/A converter, which converts a pulse-width modulated rectangular-wave scan signal from the control device 20 to generate a scanning voltage in the range of 1.5 - 4.1 V having a varying ratio (gradient) determined by a CR time constant thereof. The operational amplifier OP1 compares an output of the D/A converter 32 with that of the amplifying circuit 22 to detect a value of the output of the absolute humidity sensor 8. The microcomputer 20 determines and stores the maximum value Vm of the output of the operational amplifier OP1.

The detecting circuit 24 comprises an operational amplifier OP2, a resistor R and a condenser C. The operational amplifier OP2 has its (-) input receive the output Vs from the amplifying circuit 22 and its (+) input receive an output Vm - Δ from the microcomputer 20. The resistor R and a condenser C included in this detection circuit 24 smooth a rectangular wave scan signal from the microcomputer 20 to derive a direct current reference value. The detecting circuit 24 compares the value Vm - Δ, the result of subtracting a value preset according to each of the running modes from the maximum value Vm measured by the measuring circuit 23, with detected absolute humidity information of the absolute humidity sensor 8, i.e., the output Vs of the amplifying circuit 22. When the output Vs of the amplifying circuit 22 becomes equal to the comparison reference value Vm - Δ, the detecting circuit 24 determines that the clothes is desirably dried so as to transmit a drying stop instructing signal to the microcomputer 20.

The temperature controlling circuit 25 comprises an operational amplifier OP3, a resistor R and a condenser C. The operation amplifier OP3 has its (-) input receive an output signal from the temperature sensor 7 and its (+) input receive set temperature information from the microcomputer 20. The operational amplifier OP3 has its (+) input and its output connected through the resistor R and functions as a non inversion amplifier. The resistor R and a condenser C, which are connected to constitute an integrating circuit, smooth the set temperature information which is pulse-width modulated from the microcomputer 20 to convert the smoothed information into direct current set temperature information. The temperature controlling circuit 25 compares temperature information sensed by the temperature sensor 7 with a preset temperature (for example, 50°C or 75°C) to transmit a signal indicating the result of the comparison to the microcomputer 20.

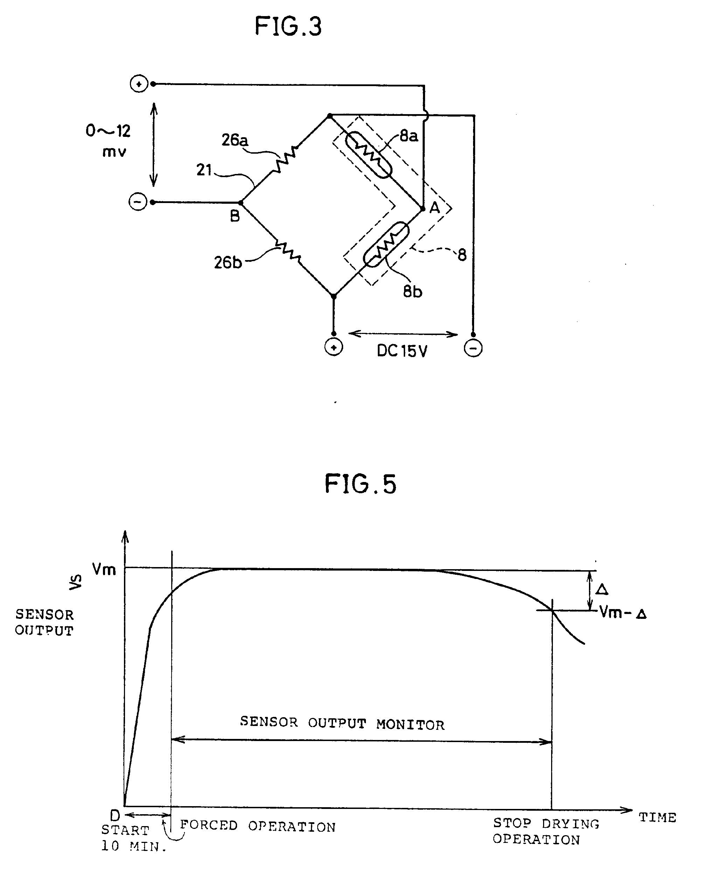

Fig. 3 shows one example of the detailed configuration of the bridge circuit 21. In this figure, the absolute temperature sensor 8 comprises a sealed thermistor 8a and a partly ventilated thermistor 8b connected in series to the thermistor 8a. The thermistor 8a or 8b may be the one having either a positive temperature coefficient or a negative temperature coefficient.

The bridge circuit 21 comprises resistors 26a and 26b bridge-connected to a series connection of the thermistors 8a and 8b. Application of a direct current voltage 15V to the absolute humidity sensor 8, as shown in Fig. 3 makes it possible to obtain a voltage (0-12 mV) across nodes A and B as an output signal of the sensor 8 depending on varied resistances of the thermistors 8a and 8b. That is, even if the thermistors 8a and 8b have the same temperature coefficient, the thermistor 8b is in contact with the exhaust air from the rotary drum 2, so that the variation of the resistance depends on the amount of water contained in the exhaust air, while a resistance value of the sealed thermistor 8a reaches a value corresponding to an exhaust air temperature, i.e., the temperature in the rotary drum. Accordingly, the voltage across the nodes A and B corresponds to the absolute humidity.

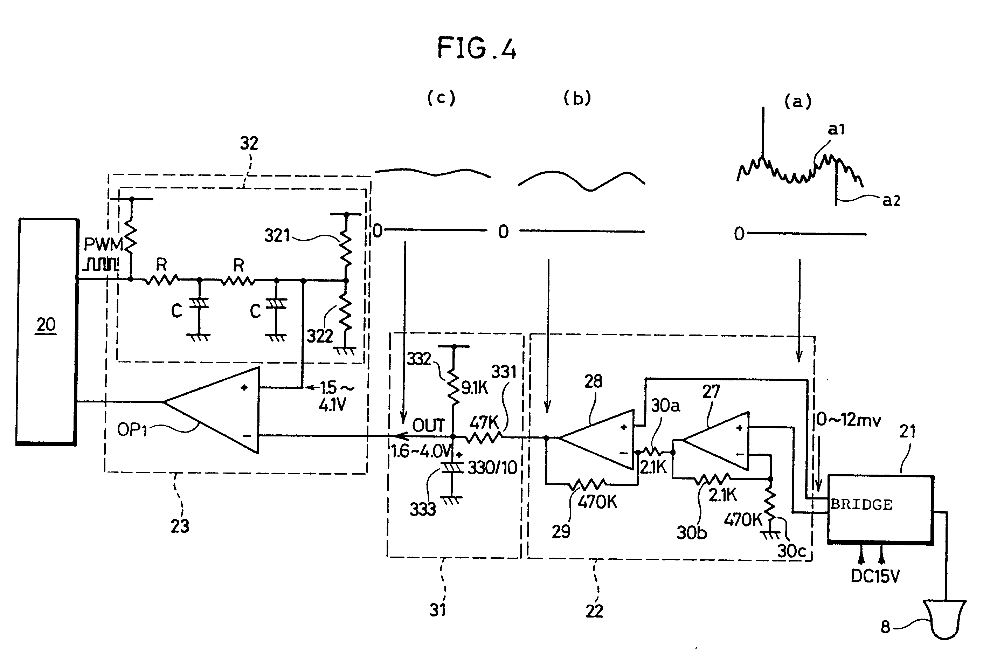

Fig. 4 shows one example of the detailed configuration of the amplifying circuit 22. Referring to Fig. 4, the amplifying circuit 22 comprises an operational amplifier (a differential amplifier) 27 having its (+) input receive one output of the bridge circuit 21 ((-) output in Fig. 4; a potential on the node in Fig. 3), and an operational amplifier 28 having its (-) input receive an output of the operational amplifier 27 through a resistor 30a and its (+) input receive the other output of the bridge circuit 21 ((+) output in Fig. 4). The operational amplifier 27 has its (-) input and its output coupled through a feedback resistor 30b and has its (-) input supplied with a reference voltage by the resistor 30b and a resistor 30c.

The operational amplifier 28 has its (-) input and its output coupled through a feedback resistor 29. While the operational amplifiers 27 and 28 both function as non-inversion amplifiers, the operational amplifiers 27 and 28 have their (+) inputs received (-) and (+) outputs from the bridge circuit 21, respectively, and the operational amplifier 28 has its (-) input receive an output of the operational amplifier 27. Therefore, the amplifying circuit 22 cancels in-phase noise included in the output of the bridge circuit 21 to amplify a potential difference between the (+) output and (-) output of the bridge circuit 21 (the voltage across the nodes A and B) approximately 200 times (1.6 - 4.0V). Here, the resistance values of the resistors 29, 30a, 30b and 30c are 470KΩ, 2.1kΩ, 2.1KΩ and 470KΩ, respectively.

A lowpass filter 31 is provided between the amplifier circuit 22 and the measuring circuit 23. The lowpass filter 31 comprises a resistor 331 for receiving an output of the amplifying circuit 22, a pull-up resistor 332, and a condenser 333. The resistance values of the resistors 331 and 332 are 47KΩ and 9.1kΩ, respectively, and the capacitance value of the condenser 333 is 330/10µF. The lowpass filter 31 removes, by its filtering action, antiphase noise included in the output of the bridge circuit 22, which is amplified by the amplifying circuit 22. An output of the lowpass filter 31 is supplied to the (-) input of the operation amplifier OP1.

Although the measuring circuit 23 is the same as the one shown in Fig. 2, the D/A converter 32 further includes resistors 321 and 322 for supplying a bias voltage to the (+) input of the operational amplifier OP1.

That is, the output of the bridge circuit 21 includes an inductive ripple from a peripheral AC line (a short-period fluctuation, a1, of a waveform (a) in Fig. 4), externally applied noise (a spike waveform a2 in Fig. 4 (a)), and a fluctuation at power supply DC 15V of the bridge circuit 21 (a long-period fluctuation of the waveform (a) in Fig. 4). The inductive ripple and externally applied noise are in-phase waveforms and are cut off by the two operational amplifiers 27 and 28 as described above. Only a fluctuation in DC 15V as shown in the waveform (b) in Fig. 4 is only revealed in an output waveform of the amplifying circuit 22. This fluctuation in DC 15V is, however, considerably reduced by the lowpass filter 31 as shown in the waveform (c) in Fig. 4, so that it exerts no adverse influence such as chattering on the operation of the operational amplifier OP1.

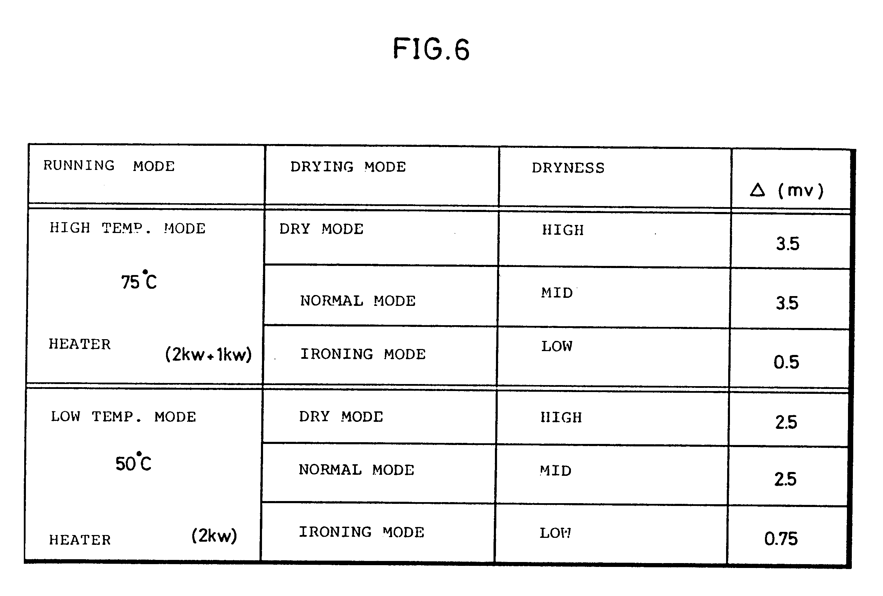

Fig. 5 shows an output of the absolute humidity sensor 8 during drying operation (which will be described later), namely, a variation of the output Vs from the amplifying circuit 22. The variation of the output of the absolute humidity sensor 8 will briefly be described with reference to the figures.

Wet clothes are put in the rotary drum 2, and then a drying operation instructing signal is generated through the start/stop switch SW1 of the instructing portion 19. In response to this signal, the electric heater 5 and/or the electric heater 6 are energized through the microcomputer 20 so as to raise the temperature in the rotary drum 2. As the temperature in the rotary drum 2 rises, water contained in the wet clothes is evaporated, the absolute humidity rises, and the output of the absolute humidity sensor 8, i.e., the output Vs of the amplifying circuit 22 also increases. After a predetermined time period since an instructing signal to start the operation is supplied, it is determined that the temperature in the rotary drum 2 reaches stably a predetermined value, so as to complete the forced operation. The forced operation is carried out for a predetermined time period (10 minutes in Fig. 5) after starting of the operation because the temperature and humidity in the rotary drum 2 are unstable during this period, and hence monitoring the absolute humidity is not so significant. Thereafter, outputs of the temperature sensor 7 and absolute humidity sensor 8 are monitored, so that the controlled drying operation is carried out based on the result of the monitor. During this drying operation, since water is evaporated from the wet clothes, this absolute humidity maintains the maximum value Vm for a predetermined period. As the clothes become dry, this absolute humidity becomes decreased and thus the output Vs of the sensor 8 also becomes decreased. When the output Vs of the absolute humidity sensor 8 is decreased by from the maximum value Vm down to the value Vm - Δ, the microcomputer 20 stops drying operation and also stops energizing the electric heater(s) 5 and/or 6 to thereafter perform cooling operation.

The microcomputer 20 carries out a control of stopping energizing the electric heater(s) 5 and/or 6 to stop the drying operation, in response to output signals from the measuring circuit 23 and from the detection circuit 24 when the output Vs (the output of the absolute humidity sensor 8) of the amplifying circuit 22 reaches the target value Vm - Δ. It also carries out a control of energizing the electric heater(s) 5 and/or 6 in response to an output signal from the temperature controlling circuit 25 so as to keep the temperature in the rotary drum 2 at a set temperature, and also carries out a load control of the motor 4 driving the rotary drum 2 and the pump 16 included in the water circulating circuit and so on. This load control of the motor 4, the pump 16 or the like causes the rotary drum 2, the pump 16 or the like to smoothly transit from the initial state to a desired state and then to the stop state.

An operational function of the clothes dryer will now be described with reference to Fig. 6. Two types of running mode, high temperature mode and low temperature mode, are implemented set in advance in the control device 9. The high temperature mode is a mode for drying clothes made from cotton or the like, which energizes both the electric heaters 5 and 6 (2KW + 1KW) to control the temperature in the rotary drum 2 at 75°C.

The low temperature mode is a mode for drying clothes made from synthetic fibers, which energizes only the electric heater 6 (2KW) to control the temperature in the rotary drum 2 at 50°C.

Three types of drying mode, dry mode, normal mode and ironing mode, are provided for each of the high temperature and low temperature modes. The dry mode is a mode for drying clothes sufficiently; the normal mode is an intermediate mode for drying clothes fairly well; and the ironing mode is a mode for setting dryness of clothes in a slightly wet state. In accordance with each of the modes, a Δ value is preset in the control device 9.

When the user selects one running mode and one drying mode using the switches SW2 and SW3 of the instructing portion 19, the microcomputer 20 selects a value in accordance with the operation mode (including both the running mode and drying mode) from the instructing portion 19 so as to allow the clothes to be dried in a dryness state desired by the user.

While the three types of drying mode are provided for each running mode in Fig. 6, the same Δ value is set in the dry mode and normal mode, that is, totally four types of the Δ value are preset in the control device 9. Although the Δ value in the dry mode and that in the normal mode are set at the same value in both the high temperature mode and low temperature mode, a difference of dryness between the normal mode and dry mode is realized by alteration of the drying operation time. That is, even after the absolute humidity reaches the predetermined value Vm - Δ, the drying operation continues for approximately 15 minutes (precisely 15 minutes or about 15 minutes) in the high temperature dry mode and approximately 10 minutes (precisely 10 minutes or about 10 minutes) in the low temperature dry mode. Accordingly, the dryness of clothes is controlled differently in the normal mode and in the dry mode.

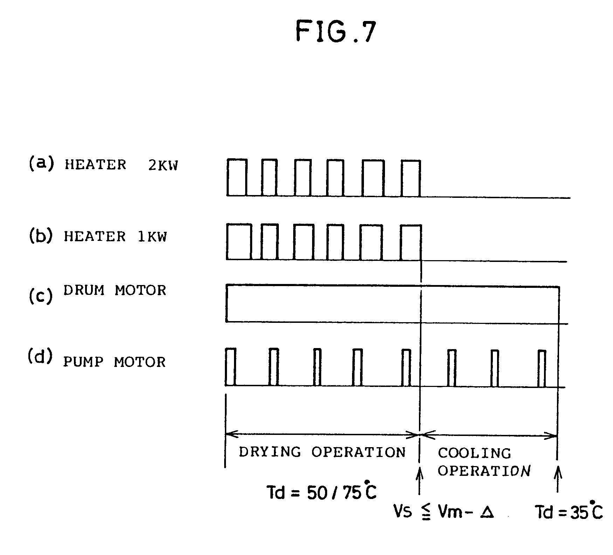

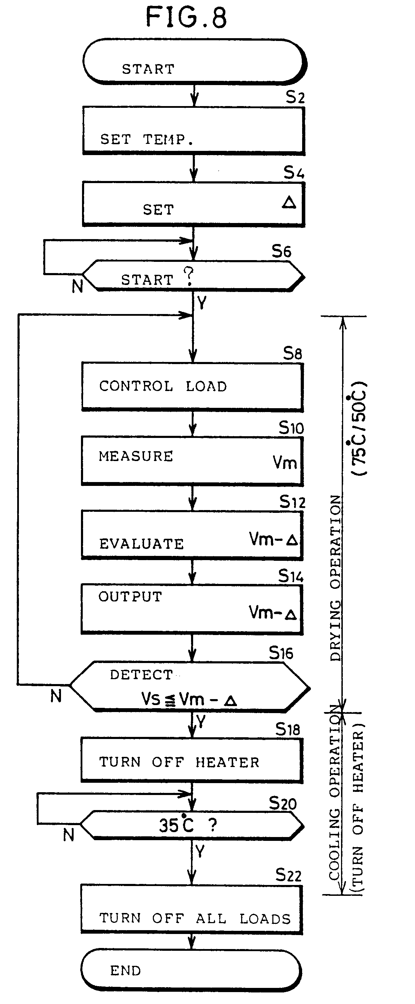

The operation state of the clothes dryer is roughly divided into a drying operation state and a cooling operation state as shown in the Fig. 7. Fig. 7 shows an operation state of the clothes dryer in the high temperature mode. In the high temperature mode, at the same time when a start instructing signal is generated, the following operations are carried out: a drying operation in which all of the electric heaters 5 and 6, the motor 4 and the pump 16 are operating, and a cooling operation in which only the motor 4 and pump 16 are operating while the electric heaters 5 and 6 stop being energized. In the operation in the low temperature mode, only the heater 6 (2KW) shown in Fig. 7 (a) is rendered operable. The operation of the clothes dryer will now be described in detail with reference to Fig. 8.

First, running mode is selected by the use of the switch SW2 of the instructing portion 19 so as to set a target temperature in the rotary drum 2 (step S2). Next, drying mode is selected through the switch SW3 of the instructing portion 19 so as to set a Δ value (step S4). Then, an operation starting instruction signal is generated from the start/stop switch SW1 of the instructing portion 19 (step S6). When the operation starting instruction signal is generated, the microcomputer 20 proceeds to drying operation mode.

In the drying operation mode, the microcomputer 20 controls loads of the motor 4, electric heater(s) 5 and/or 6 and pump 16 to perform rotation, heating and exhaustion of the rotary drum 2 (step S8).

After the drying operation starts, the operation is performed in forced running mode for a predetermined period (e.g., 10 minutes), wherein the output of the absolute humidity sensor 8 is not monitored.

After a predetermined time period, the output Vs of the amplifying circuit 22, i.e., the output of the absolute humidity sensor 8 is monitored so as to measure the maximum value Vm thereof for every predetermined time (every 60 sec.) (step S10). A detailed description will be given later on a measuring operation of maximal absolute humidity information Vm in accordance with an output of the measuring circuit 23.

The microcomputer 20 evaluates Vm - Δ in response to the output of the measuring circuit 23 (step S12) and then outputs a signal representing this evaluated value Vm - Δ in the form of a pulse-width modulated signal (step S14).

The signal indicating Vm - Δ from the microcomputer 20 is supplied to the detecting circuit 24. The detecting circuit 24 compares an output signal Vs from the amplifying circuit 22 with the value Vm - Δ from the microcomputer 20 (step S16). When the target value Vm - Δ becomes greater than a signal Vs indicating the absolute humidity, the microcomputer 20 determines that the clothes are desirably dried so as to stop energizing the heater(s) 5 and/or 6 (step S18). That is, the drying operation ends and then proceeds to the cooling operation when Vm - Δ is determined to be greater than the output Vs of the amplifying circuit 22, in the detecting circuit 24.

In a case with the Δ value shown in Fig. 6, the drying operation continues for another 15 minutes in the high temperature dry mode and another 10 minutes in the low temperature dry mode after the time when Vs ≦ Vm - Δ is detected.

Proceeding into the cooling operation, the microcomputer 20 sets a target temperature at 35°C and supply this set temperature to the temperature controlling circuit 25. When an output of the temperature controlling circuit 25 indicates that the temperature in the rotary drum 2 reaches 35°C, the microcomputer 20 stops load-driving of the drum motor and pump motor. This stop of load driving stops rotation of the rotary drum 2 and water pumping by the pump 16 (step S22). In step S22, all loads are released, and when the rotary drum 2 and pump 16 stop operating after a predetermined time period, the clothes drying is completed, so that the user can take the clothes out of the rotary drum 2.

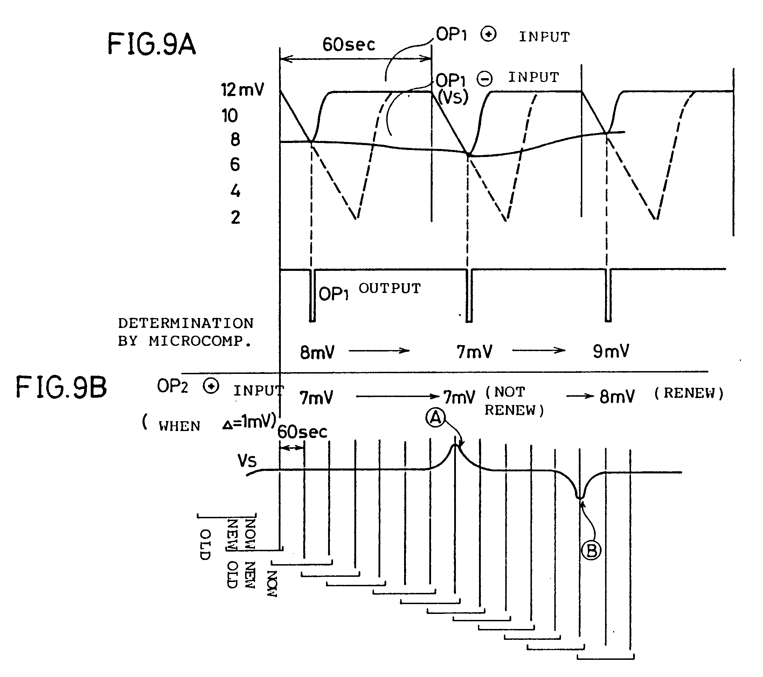

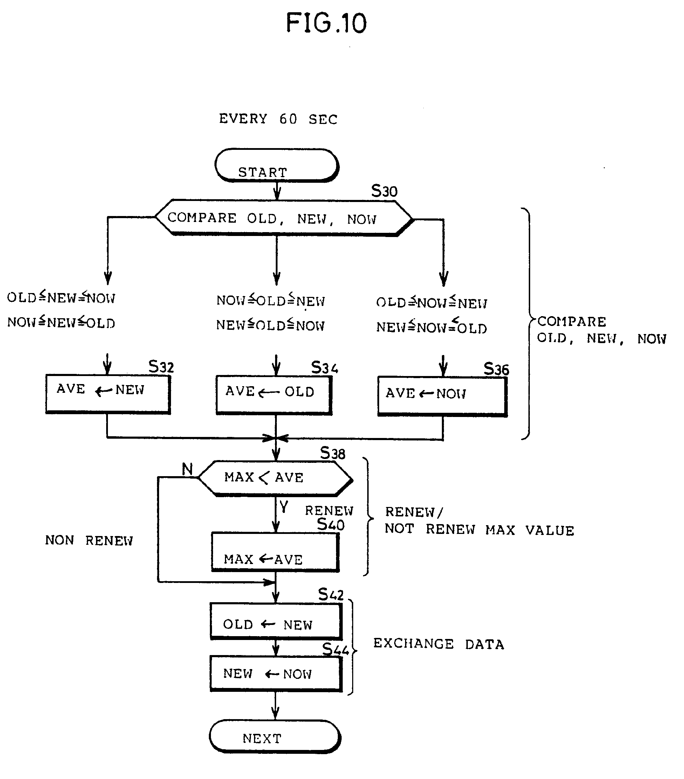

A method of evaluating the maximum value Vm in step S10 shown in Fig. 8 will now be described with reference to Figs. 9A, 9B and 10.

An output of the absolute humidity sensor 8 is supplied to the (-) input of the operational amplifier OP1 in the measuring circuit 23 through the bridge circuit 21 and the amplifying circuit 22 (further through the filter circuit 31). An output signal of the operational amplifier OP1 is measured for a predetermined time, e.g. every 60 sec. by the microcomputer 20. The measurement of the output of the operational amplifier OP1 every 60 sec. may be carried out in such a manner that the amplifying circuit 22 is rendered operative every 60 sec. or that the microcomputer 20 samples the output of the operational amplifier OP1 every 60 sec.

The embodiment shown in Figs. 3 and 9 shows a case that a scan voltage with a 60-sec. period (which is supplied from the filter 32) is compared with the output of the amplifying circuit 22. In Fig. 9A, however, the output of the amplifying circuit 22 (including the filter circuit 31) is converted into an output level of the absolute humidity sensor 8.

The converter 32 converts a pulse-width modulated rectangular-wave scan signal from the microcomputer 20 into an analog scan voltage signal (a sawtooth voltage signal) which is to be supplied to the (+) input of the operational amplifier OP1. An output maximal value of this D/A converter 32 is converted into the output level of the sensor 8 to be set at 12 mV. To simplify the description, a voltage value converted into the output level of the absolute humidity sensor 8 will hereinafter be employed.

When the output of the absolute humidity sensor 8 becomes greater than that of the converter 32, the operational amplifier OP1 inverts an output thereof (from "1" to "0"). The microcomputer 20 accepts the output of the converter 32 generated at the time when the output of the operational amplifier OP1 varies, as measured data (NOW), and also allows the output of the converter 32 to return to the maximum value. This configuration allows the output of the absolute humidity sensor 8 to be measured once every 60 sec. Since the output of the converter 32 is a scan voltage and has a constant waveform, it is possible to easily measure the data (NOW) if a time period before the varying time is monitored.

The microcomputer 20 stores the data (NOW) measured at this time, data (NEW) measured before, and data (OLD) measured still before into its internal memory device.

Intermediate data out of these three measured data is assumed to be an average value AVE. That is, the data NOW, NEW and OLD are first compared one another as shown in Fig. 10 (step S30). If the data NEW is found to be between the data NOW and OLD by this comparison, the data NEW is assumed to be the average value AVE (step S32). If the data OLD is between the data NOW and NEW, the data OLD is assumed to be the average value AVE (step S34). If the data NOW is between the data OLD and data NEW, the data NOW is assumed to be the average value AVE (step S36).

Successively, this average value AVE is made in comparison with a maximum value Vm (MAX) which is before that time point (step S38). When the average value AVE is found greater than the maximum value Vm (MAX) by this comparison, the average value AVE is replaced with the maximum value Vm (MAX) (step S40). When the average value AVE is equal to or less than the maximum value Vm (MAX), the average value AVE is not employed, so that the maximum value Vm is maintained for the previous measured value.

Evaluation of the maximum value Vm using the average value AVE makes it possible to ignore even an existence of one out of three data, which is distant far from the other two (points A and B in Fig. 9B) and also possible to remove an unreliable abnormal value during the measurement period of 60 sec.

When the maximum value Vm (MAX) is then evaluated, the data NEW is treated as data OLD (step S42) and the data NOW as data NEW (step S44) for preparation for the next measuring operation.

That is, the microcomptuer 20, which monitors a signal to be supplied to the (+) input of the operational amplifier OP1, holds the signal value supplied to the (+) input of OP1 at the time when the output of the operational amplifier OP1 varies during the period of 60 sec., and also allows a signal voltage to be supplied to the (+) input to rise at the time when the output of the operational amplifier OP1 is inverted. This makes it possible to detect a maximum value of the output of the absolute humidity sensor 8 during the predetermined time period of 60 sec. i.e., the output Vs from the amplifying circuit 22. The microcomputer 20 allows the maximum value of the operational amplifier OP1 during 60 sec. to be accepted as data NOW.

As an alternative procedure, a simple average such as arithmetical mean of the data NEW, NOW and OLD may be employed to obtain the maximum value Vm (MAX) for comparison reference.

In addition, another scheme may be employed wherein an analogue or digital maximum value detector may be provided to monitor the output of the amplifier circuit 22 (or low pass filter 32) for detecting a maximum value in each predetermined time period and wherein a predetermined number of the maximum values from the minimum value detector are subjected to a mean operation such as averaging, arithmetical mean operation, or extracting an intermediate or middle value operation, to provide the maximum value for comparison reference Vm (MAX).

Further, still another expedient may be employed wherein a possible maximum value is obtained by averaging an output of the amplifier circuit 22 (or low pass filter 32) in a predetermined time duration and wherein the greatest value of the possible maximum values thus obtained is employed as the maximum value for the reference Vm (MAX). In this case, any operation for obtaining a mean value as described above may be incorporated.

A voltage value Vm - Δ, which is the result of subtracting a value Δ determined according to each of the operation modes (running mode and drying mode) from the maximum value Vm thus obtained, is evaluated by the microcomputer 20 and supplied to the (+) input of the operational amplifier OP2 to be compared with the output Vs of the absolute humidity sensor 8, supplied to the (-) input thereof. As shown in Fig. 9B, when the absolute humidity maximal value Vm is 8 mV, and Δ is 1 mV, a value of 8 - 1 = 7 mV is applied to the (+) input of the operational amplifier OP2. At the time when a signal Vs transmitted from the absolute value humidity sensor 8 through the bridge circuit 21 and the amplifying circuit 22 (including the filter circuit 31) decreases to a comparison reference value Vm - Δ from the microcomputer 20, the output of the operational amplifier OP2 rises from "0" to "1". The microcomputer 20 stops energizing the electric heater(s) 5 and/or 6 in response to the output inversion of the operational amplifier OP2 so as to stop the drying operation.

While Δ = 1 mV is shown as one example in Fig. 9B, this Δ value is in general, as shown in Fig. 4, 3.5 mV for the dry mode and normal mode and 0.5 mV for the ironing mode, in the high temperature mode, while it is 2.5 mV for the dry mode and normal mode and 0.75 mV for the ironing mode, in the low temperature mode.

Next, a description will be given of a restarting operation in case that the running operation of the clothes dryer is interrupted due to the closing/opening of the door or service interruption.

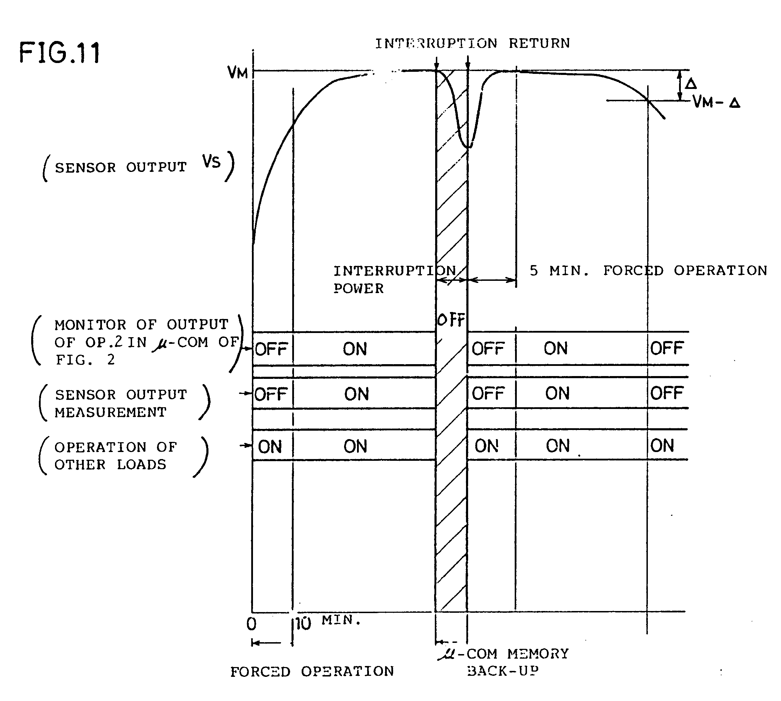

When the running operation is interrupted, the microcomputer 20 generates an instruction of interruption in response to the interruption of the running operation and stores an output signal from the absolute humidity sensor 8, which is measured immediately before the interruption. For this purpose, the microcomputer 20 includes a memory back-up device 200, which stores, upon the interruption, an output of the sensor 8 generated immediately before the interruption. An operation during which the running operation is interrupted and then re-started will be described with reference to Fig. 11.

As shown in Fig. 11, with the drying operation started, a forced operation is first carried out in which the loads of the electric heaters 5 and 6, the motor 4 or the like are forcedly operated for 10 minutes. After 10 minutes, the microcomputer 20 starts monitoring the output of the absolute humidity sensor 8 every 60 sec. That is, the detecting circuit 24 starts monitoring the output of the sensor. This is possible because the first 10 minutes are the period, during which the absolute humidity in the rotary drum 2 rises, and thus are in unstable state, so that it is useless to monitor the sensor output, as described above.

In case that the operation is interrupted at a certain time during the first 10 minutes due to service interruption or the opening/closing of the door 1a, the running operation restarts from the 10- min. forced operation after the returning. This is possible because during the first 10 minutes, the absolute humidity is unstable and thus the detecting circuit 24 does not perform monitoring, and no data exist in the memory of the microcomputer 20.

In case that the operation is interrupted after 10 minutes due to service interruption or the opening/closing of the door 1a, a forced operation is carried out for 5 minutes after the returning or recovering. This is carried out for the purpose that since the interruption of the operation causes the output of the sensor 8 to temporarily fall due such as to decreasing temperature or exhaustion through the open door, the microcomputer 20 does not perform monitoring during this period while ignoring the sensor output of the operational amplifier OP2, and wait until the absolute humidity in the rotary drum 2 returns to the state immediately before the interruption. The time period of 5 minutes is employed based on an experimental numeric value, that is, it takes 5 minutes to have the temperature in the rotary drum 2 return to the original temperature in such a general case that the clothes dryer is operating in high temperature mode (75°C) while ambient temperature is 5°C, and the door is opened for 3 minutes.

After the output Vs of the sensor 8 returns to the level immediately before the interruption after 5 minutes, the microcomputer 20 starts monitoring the sensor output Vs through the operational amplifier OP2. At this time, the memory back-up device 200 of the microcomputer 20 is storing the output of the sensor 8 (the output of the operational amplifier OP1) immediately before the interruption shown in Figs. 9 and 10, and is holding all the above described three data NOW, NEW and OLD, the average value AVE and the maximum value Vm (MAX).

Then, the following operation control is restarted by the microcomputer 20. The microcomputer 20 supplies the voltage value Vm - Δ, which is the result of subtracting the value Δ determined in each mode (running mode, drying mode) from the maximum value Vm, to the (+) input of the operational amplifier OP2, for comparison of the voltage value Vm - Δ with the output Vs of the sensor 8, supplied to the (-) input of OP2, and then allows the output of the operational amplifier OP2 to rise from "0" to "1" when the sensor output Vs decreases to Vm - Δ.

As has been described heretofore, the clothes dryer according to the present invention is structured so as to detect the absolute humidity varying depending on the temperature in the rotary drum and thus control the ending/continuing of the drying operation using this detected absolute humidity. That is, such a configuration is provided as to derive the maximum value Vm of the output Vs of the absolute humidity sensor and then complete the drying operation at the time when the absolute humidity sensor output Vs is decreased by the predetermined value from the maximum value Vm. Therefore, the maximum value of the absolute humidity in the rotary drum varies depending on the temperature in the rotary drum; however, since the drying operation is completed when the absolute humidity sensor output is decreased by a predetermined absolute humidity from the varied maximum value of the absolute humidity, even variations in the amount, material, dryness etc. of the clothes in the rotary drum caused neither excessive dryness nor insufficient dryness and thus make it possible to dry the clothes in completely desirable state.

In addition, since the clothes dryer is structured so as to detect the absolute humidity in the rotary drum using the absolute humidity sensor comprising the thermistor made such as of ceramics in order to monitor clothes dryness, it is possible to dry the clothes at a high temperature (e.g., 75°C). Furthermore, this makes it possible to enhance antiseptic effects on the clothes as well as to reduce the time required for drying the clothes.

Moreover, the absolute humidity sensor has no hysteresis in its input-output characteristic and operates at high response speed. Since the absolute humidity sensor includes the thermistor so as to detect humidity in accordance with a temperature variation upon the evaporation of water adhered to the clothes, the sensor has no such disadvantage as involved in the relative humidity sensor, in which surface electric conductivity fluctuates upon adhesion of foreign materials, and has a stable operation characteristic even upon the adhesion of the foreign materials. Accordingly, it is possible to control the humidity accurately and rapidly by employing the absolute humidity sensor.

Further, the use of the absolute humidity sensor 8 enables the sensor output to be taken out in linear form, and the use of the amplifying circuit 22 and lowpass filter 31 enables the in-phase and antiphase noise to be cut off, resulting in a highly accurate humidity control with a simple circuit configuration.

Since the control device 9 comprises the microcomputer 20 including the memory back-up device for storing a signal transmitted from the absolute humidity sensor 8, monitored immediately before the interruption of the operation due to service interruption or the opening/closing of the door 1a, it is possible to restart the operation based on the content stored in the memory back-up device after the operation is recovered. In addition, when the operation is interrupted for a long time due to the opening/closing of the door 1a or service interruption, even if the humidity in the rotary drum 2 is already decreased, the control device 9 does not complete the operation by erroneously determining that the clothes is already dried, but can restart the operation from the dryness state of the clothes upon the interruption, resulting in saving of the operation time and power consumption.

As described in the foregoing, the configuration that humidity in the rotary drum is detected by employing the absolute humidity sensor enables not only the drying operation at high temperature with a reduced time period required for the operation, but also makes it possible to control in multi-level and accurately the humidity of the clothes after dried, resulting in a clothes dryer having high performance and large energy-saving effects.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A clothes dryer including a rotary drum (2) being rotated for drying the clothes inside said rotary drum by supplying a heated air into said rotary drum, comprising:
humidity detecting means (8, 21, 22, 31) for detecting a humidity inside said rotary drum when said clothes dryer is running;
memory means (in 20) for storing a value of humidity, said value of humidity stored in memory means being initialized in response to a starting of the running of said clothes dryer;
value storing means (in 20) for selecting a maximum value of humidity out of the values of humidity detected by said humidity detecting means and for storing thus selected maximum value of humidity into said memory means while said clothes dryer is running said value storing means being coupled to said humidity detecting means to receive the value of humidity detected by said humidity detecting means, and said value storing means also being coupled to said memory means to store said maximum value of humidity in said memory means,
control means (20), coupled to said humidity detecting means to receive said value of humidity detected by said humidity detecting means and also coupled to said memory means to receive the value of humidity in said memory means, for comparing the maximum value of humidity stored in said memory means and a newest value of humidity detected by said humidity detecting means and for stopping the operation of said clothes dryer when the newest value of humidity is smaller than the maximum value of humidity stored in said memory means by a predetermined value.

2. A clothes dryer according to claim 1, wherein said humidity detecting means is adapted to detect an amount of moisture contained in a predetermined volume at predetermined time intervals.

3. A clothes dryer according to claim 1, wherein said humidity detecting means is adapted to detect an average humidity over a predetermined period at predetermined time intervals.

4. A clothes dryer according to claim 1, further comprising:
a first changing means (5, 6, 20, 23, 24) for changing a temperature of said heated air, and
a second changing means for changing said predetermined value.

5. A method of controlling a clothes dryer including a rotary drum bein rotated for drying the clothes inside said rotary drum by supplying a heated air into said rotary drum, comprising the steps of:
detecting a humidity and a maximum humidity inside said rotary drum while said clothes dryer is running; and
stopping the operation of said clothes dryer when a currently detected humidity inside the rotary drum is smaller by a predetermined value than the maximum humidity inside the rotary drum during the operation of said clothes dryer.

## Patentansprüche

1. Wäschetrockner mit einer Rotationstrommel (2), die zum Trocknen der Wäsche in der Trommel gedreht wird, wobei Heißluft in die Rotationstrommel zugeführt wird, mit:
einer Feuchtigkeitsdetektoreinrichtung (8, 21, 22, 31) zum Detektieren einer Feuchtigkeit innerhalb der Rotationstrommel, wenn der Wäschetrockner läuft;
einer Speichereinrichtung (in 20) zum Speichern eines Feuchtigkeitswertes, wobei der in der Speichereinrichtung gespeicherte Feuchtigkeitswert in Abhängigkeit von einem Starten des Laufes des Wäschetrockners eingeleitet wird;
einer Wert-Speichereinrichtung (in 20) zum Wählen eines maximalen Feuchtigkeitswertes aus den Feuchtigkeitswerten, die durch die Feuchtigkeitsdetektoreinrichtung detektiert worden sind, und zum Speichern des so gewählten maximalen Feuchtigkeitswertes in der Speichereinrichtung, während der Wäschetrockner läuft, wobei die Wert-Speichereinrichtung an die Feuchtigkeitsdetektoreinrichtung gekoppelt wird, um den Feuchtigkeitswert zu erhalten, der durch die Feuchtigkeitsdetektoreinrichtung detektiert wurde, und wobei die Wert-Speichereinrichtung ebenfalls an die Speichereinrichtung gekoppelt ist, um den maximalen Feuchtigkeitswert in der Speichereinrichtung zu speichern;
einer Steuereinrichtung (20), die an die Feuchtigkeitsdetektoreinrichtung gekoppelt ist, um den Feuchtigkeitswert, der von der Feuchtigkeitsdetektoreinrichtung detektiert worden ist, zu empfangen, und die ebenfalls an die Speichereinrichtung gekoppelt ist, um den maximalen Feuchtigkeitswert, der in der Speichereinrichtung gespeichert ist, mit einem neuesten Feuchtigkeitswert zu vergleichen, der durch die Feuchtigkeitsdetektoreinrichtung detektiert worden ist, und zum Stoppen der Operation des Wäschetrockners, wenn der neueste Feuchtigkeitswert kleiner als der maximale Feuchtigkeitswert ist, der mittels eines vorbestimmten Wertes in der Speichereinrichtung gespeichert ist

2. Wäschetrockner nach Anspruch 1, wobei die Feuchtigkeitsdetektoreinrichtung eine Feuchtigkeitsmenge, die in einem vorbestimmten Volumen enthalten ist, in vorbestimmten Zeitintervallen detektieren kann.

3. Wäschetrockner nach Anspruch 1, wobei die Feuchtigkeitsdetektoreinrichtung eine mittlere Feuchtigkeit über eine vorbestimmte Zeitspanne in vorbestimmten Zeitintervallen detektieren kann.

4. Wäschetrockner nach Anspruch 1, der weiterhin aufweist:
eine erste Änderungseinrichtung (5, 6, 20, 23, 24) zum Ändern der Temperatur der Heißluft, und
eine zweite Änderungseinrichtung zum Ändern des vorbestimmten Wertes.

5. Verfahren zum Steuern eines Wäschetrockners mit einer Rotationstrommel, die zum Trocknen der Wäsche innerhalb der Rotationstrommel durch Zuführen von Heißluft in die Rotationstrommel gedreht wird, mit den Schritten:
Detektieren einer Feuchtigkeit und einer maximalen Feuchtigkeit innerhalb der Rotationstrommel während der Wäschetrockner läuft; und
Stoppen der Operation des Wäschetrockners, wenn während der Operation des Wäschetrockners eine laufend detektierte Feuchtigkeit innerhalb der Rotationstrommel in einen vorbestimmten Wert kleiner als die maximale Feuchtigkeit innerhalb der Rotationstrommel ist.

## Revendications

1. Sèche-linge comprenant un tambour rotatif (2) qui est animé d'un mouvement de rotation pour sécher le linge placé à l'intérieur du tambour rotatif en fournissant de l'air chauffé audit tambour rotatif, comprenant :
- un moyen de détection d'humidité (8, 21, 22, 31) pour détecter l'humidité à l'intérieur dudit tambour rotatif lorsque ledit sèche-linge fonctionne;
- un moyen de mémoire (en 20) pour stocker une valeur de l'humidité, ladite valeur de l'humidité stockée dans le moyen de mémoire étant initialisée en réponse au commencement du fonctionnement dudit sèche-linge;
- un moyen de stockage de valeur (en 20) pour sélectionner la valeur maximum de l'humidité au sein des valeurs de l'humidité détectée par ledit moyen de détection d'humidité et pour stocker la valeur maximum de l'humidité ainsi sélectionnée dans ledit moyen de mémoire alors que ledit sèche-linge fonctionne, ledit moyen de stockage de valeur étant relié audit moyen de détection d'humidité pour recevoir la valeur de l'humidité détectée par ledit moyen de détection d'humidité, et ledit moyen de stockage de valeur étant aussi relié audit moyen de mémoire pour stocker ladite valeur maximum de l'humidité dans ledit moyen de mémoire,
- un moyen de commande (20) relié audit moyen de détection d'humidité pour recevoir ladite valeur de l'humidité détectée par ledit moyen de détection d'humidité et également relié audit moyen de mémoire pour recevoir la valeur de l'humidité dans ledit moyen de mémoire, afin de comparer la valeur maximum de l'humidité stockée dans ledit moyen de mémoire et la valeur la plus récente de l'humidité détectée par ledit moyen de détection d'humidité et afin d'arrêter le fonctionnement dudit sèche-linge lorsque la valeur la plus récente de l'humidité est inférieure à la valeur maximum de l'humidité stockée dans ledit moyen de mémoire suivant une valeur prédéterminée.

2. Sèche-linge selon la revendication 1, dans lequel ledit moyen de détection d'humidité est destiné à détecter un pourcentage de l'humidité contenue dans un volume prédéterminé à des intervalles de temps prédéterminés.

3. Sèche-linge selon la revendication 1, dans lequel ledit moyen de détection d'humidité est destiné à détecter une humidité moyenne pendant un laps de temps prédéterminé à des intervalles de temps prédéterminés.

4. Sèche-linge selon la revendication 1, comprenant en outre :
- un premier moyen de changement (5, 6, 20, 23, 24) pour modifier la température dudit air chauffé, et
- un second moyen de changement pour modifier ladite valeur prédéterminée.

5. Procédé pour commander un sèche-linge comprenant un tambour rotatif animé d'un mouvement de rotation pour sécher le linge placé à l'intérieur dudit tambour rotatif en fournissant de l'air chauffé audit tambour rotatif, comprenant les étapes consistant à :
- détecter l'humidité et l'humidité maximum à l'intérieur dudit tambour rotatif alors que ledit sèche-linge fonctionne; et
- arrêter le fonctionnement dudit sèche-linge lorsque l'humidité détectée couramment à l'intérieur du tambour rotatif est inférieure suivant une valeur prédéterminée à l'humidité maximum à l'intérieur du tambour rotatif pendant le fonctionnement dudit sèche-linge.
